**Europäisches Patentamt**

(19) **European Patent Office**

**Office européen des brevets**

(11) Veröffentlichungsnummer: **0 043 946**
**B1**

(12) **EUROPÄISCHE PATENTSCHRIFT**

(45) Veröffentlichungstag der Patentschrift:
**20.03.85**

(51) Int. Cl.⁴: **G 01 N 30/30**

(21) Anmeldenummer: **81104842.0**

(22) Anmeldetag: **23.06.81**

(54) **Thermostatisiervorrichtung für Flüssigkeitschromatographen.**

(30) Priorität: **11.07.80 DE 3026267**

(43) Veröffentlichungstag der Anmeldung:
**20.01.82 Patentblatt 82/3**

(45) Bekanntmachung des Hinweises auf die Patenterteilung:
**20.03.85 Patentblatt 85/12**

(84) Benannte Vertragsstaaten:
**DE FR GB**

(56) Entgegenhaltungen:
**DE - A - 1 598 493**
**GB - A - 1 023 982**
**US - A - 3 165 147**
**US - A - 3 305 000**
**US - A - 3 522 725**
**US - A - 3 841 059**
**US - A - 4 045 998**

(73) Patentinhaber: **Hewlett-Packard GmbH, Herrenberger Strasse 110, D-7030 Böblingen (DE)**

(72) Erfinder: **Schrenker, Helge, Fritz-Erler-Strasse 7, D-7500 Karlsruhe 1 (DE)**

(74) Vertreter: **Schulte, Knud, Dipl.-Ing., c/o Hewlett-Packard GmbH Europ. Patent- und Lizenzabteilung Postfach 1430 Herrenberger Strasse 130, D-7030 Böblingen (DE)**

ACTORUM AG

## Beschreibung

Die Erfindung betrifft eine Thermostatisiervorrichtung für Flüssigkeitschromatographen.

Der Ablauf des Trennprozesses in der Trennsäule eines Flüssigkeitschromatographen ist temperaturabhängig. Die Retentionszeit, d.h. die zur Identifizierung einer chromatographisch zu bestimmenden Substanz herangezogene Aufenthaltsdauer in der Trennsäule, kann sich z.B. um 3 bis 4% je Grad Temperaturänderung ändern. Dies ermöglicht einerseits, die Temperatur der Trennsäule als Parameter zur Optimierung des Trennprozesses heranzuziehen, erfordert aber andererseits, dass diese Temperatur über den gesamten Längenbereich der Trennsäule konstant auf einem definierten Wert gehalten wird.

Um die Temperatur in der Trennsäule konstant zu halten, sind im wesentlichen drei verschiedene Methoden bekannt. Die gebräuchlichste Methode besteht darin, die Trennsäule in einem Luftumwälzthermostaten unterzubringen, dessen Innen-Lufttemperatur geregelt wird (z.B. Hewlett-Packard Technical Information 4/73 «High-Speed Liquid Chromatograph Model 1010A»). Eine andere Methode besteht darin, die Trennsäule in einem Aluminiumblock zu montieren, dessen Temperatur geregelt wird (z.B. Varian Product Bulletin SEP-2182A (USA 20M 978) «5000 Series Liquid Chromatographs»). Gemäss der dritten Methode wird die Trennsäule konzentrisch in einem Rohr montiert, das von einer durch einen Flüssigkeitsumlaufthermostaten auf konstanter Temperatur gehaltenen Flüssigkeit, z.B. Wasser, durchströmt wird (Snyder, L.R. und Kirkland, J.J.: Introduction to Modern Liquid Chromatography, Seite 128, John Wilen & Sons 1974).

Bei allen drei Anordnungen können erhebliche axiale und radiale Temperaturgradienten in der Trennsäule auftreten. Die mobile Phase tritt nämlich mit Raumtemperatur in die Trennsäule ein und wird erst dort auf deren Temperatur aufgeheizt. Die erforderliche Wärmemenge muss durch die meist aus rostfreiem Stahl bestehende Säulenwand zugeführt werden. Der Wärmeübergang von der Säulenwand auf die mobile Phase und die Temperaturleitzahl der laminar durch die stationäre Phase strömenden mobilen Phase reichen für eine Temperaturangleichung bereits in unmittelbarer Nähe des Säuleneingangs nicht aus. Dies führt zu den erwähnten Temperaturgradienten in der Trennsäule. In einem Luftthermostaten wurden beispielsweise bei 80° Celsius Lufttemperatur in einer mit 4 ml/min Wasser durchströmten Trennsäule von 25 cm Länge und 4,6 mm Innendurchmesser Temperaturdifferenzen zwischen Säuleneingang und Säulenausgang bis zu 20° Celsius gemessen. Da die Temperaturgradienten von der Art der verwendeten Trennsäule und deren Lage im Thermostaten abhängen, ist die Reproduzierbarkeit der Analysenergebnisse erschwert. Ausserdem wird die Trennleistung der Säule durch die Temperaturgradienten deutlich beeinträchtigt.

Um diese Nachteile zu vermeiden, ist bereits vorgeschlagen worden (CZ-Chemie Technik 1 (1972) 73–78), die mobile Phase vor Eintritt in die Trennsäule aufzuheizen. Die für den Wärmetauscher benötigte Wärmemenge wird gemäss diesem Vorschlag der Umluft des Thermostaten entnommen, was wegen der schlechten Wärmeübertragung ein relativ grosses Wärmetauschervolumen (ca. 0,6 ml) erfordert.

Ein Flüssigkeitschromatograph, bei dem die Flüssigkeit vor Eintritt in die Trennsäule aufgeheizt wird, ist aus US-A-3 522 725 bekannt. Bei dieser Vorrichtung ist der Wärmetauscher zwischen der Probeneinspritzvorrichtung und dem Eingang der Trennsäule angeordnet und weist eine von der Flüssigkeit durchstömte Kapillarschlange auf, die in einer verdickten Seitenwand des beheizbaren Gehäuses des Chromatographen verläuft. Der Wärmetauscher und die Trennsäule bei dieser bekannten Vorrichtung haben jeweils ein Volumen in der Grössenordnung von 1 ml. Die Entwicklung der Flüssigkeitschromatographie hat jedoch zu kleinvolumigen Trennsäulen geführt, bei denen ein derart grosses Wärmetauschervolumen nicht tragbar ist. Es darf höchstens einige µl betragen.

Der Erfindung liegt die Aufgabe zugrunde, eine Thermostatisiervorrichtung gemäss dem Oberbegriff des Anspruchs 1 derart zu verbessern, dass das Wärmetauschervolumen im Mikroliterbereich liegt, und dass sich in der Trennsäule keine störenden Temperaturgradienten ausbilden.

Diese Aufgabe wird erfindungsgemäss gelöst durch das Kennzeichen von Anspruch 1.

Wenngleich bei den in der Flüssigkeitschromatographie üblichen geringen Durchflussgeschwindigkeiten (unter 5 ml/min) in den üblichen Kapillarrohren von etwa 0,3 mm Innendurchmesser eine laminare Strömung zu erwarten ist, die den Wärmeübergang erschwert, hat sich überraschenderweise herausgestellt, dass auch bei solchen geringen Durchflussgeschwindigkeiten in Kapillarrohren unter 0,15 mm Innendurchmesser sich eine Strömung ausbildet, die Ähnlichkeiten mit einer turbulenten Strömung hat, d.h. bei der ein radialer Flüssigkeitstransport im Rohr stattfindet. Dies führt zu einer wesentlich verbesserten Wärmeübertragung von der Rohrwand auf die mobile Phase.

Die Thermostatisiervorrichtung ist vorzugsweise so dimensioniert, dass die Temperatur der Umgebungsluft der Trennsäule und die Temperatur der mobilen Phase bei deren Austritt aus dem Wärmetauscher um nicht mehr als 2° voneinander abweichen. Bei passender Dimensionierung ändert sich die Temperatur der mobilen Phase in Abhängigkeit von der Durchflussgeschwindigkeit (bis 5 ml/min) auch um nicht mehr als ± 2° Celsius.

Eine zweckmässige Istwertmessung der Temperatur ergibt sich aus Anspruch 2.

Die Erfindung wird im folgenden anhand eines Ausführungsbeispiels in Verbindung mit der zugehörigen Zeichnung erläutert. In der Zeichnung zeigen

Figur 1 schematisch eine erfindungsgemässe Thermostatisiervorrichtung im Querschnitt;

Figur 2 den in der Thermostatisiervorrichtung gemäss Figur 1 verwendeten Wärmetauscherblock in Draufsicht und im Querschnitt und

Figur 3 die Temperaturverläufe von mobiler Phase und Luft längs des Wärmetauschers gemäss Figur 2.

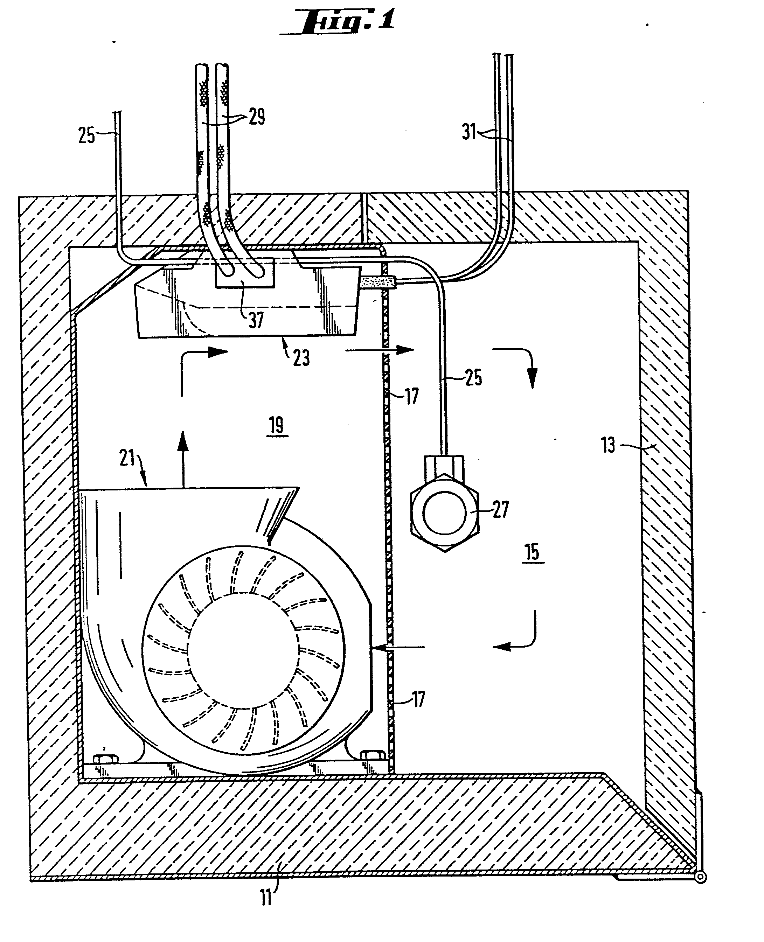

In Figur 1 ist mit 11 ein Kasten aus wärmeisolierendem Material bezeichnet. Der Kasten 11 weist einen Deckel 13 auf, der zum Zwecke des Zugangs zu einem Säulenraum 15 geöffnet werden kann. Eine luftdurchlässige Zwischenwand 17, die z. B. auf gelochtem Blech bestehen kann, trennt den Säulenraum 15 von einem Heiz- und Gebläseraum 19.

Im Raum 19 befindet sich ein Querstromgebläse 21, das im vorliegenden Beispiel eine Walzenlänge von 300 mm und eine Umwälzleistung von etwa 20 ls⁻¹ hat. Der Verlauf der durch das Gebläse 21 erzeugten Luftströmung ist durch Pfeile angedeutet.

Ein Wärmetauscherblock 23, vorzugsweise ein auf der Unterseite mit Rippen versehener Aluminiumblock ist so innerhalb des Gehäuses 11 angeordnet, dass er im Strömungsweg der umgewälzten Luft liegt. Ausserdem kann er mit der Trennwand 17 wärmeleitend verbunden sein. Durch den Wärmetauscherblock 23 führt ein Kapillarrohr 25, durch das die mobile Phase und die Probensubstanz zu einer Trennsäule 27 strömen, die im Säulenraum 15 untergebracht ist. Zum Wärmetauscherblock 23 führen ausserdem noch elektrische Zuleitungen 29 und 31 für eine Heizung und einen Temperaturfühler.

Weitere Einzelheiten der Trennsäule 27, deren Zu- und Ableitungen sowie des sonstigen Lösungsmittelkreislaufs sind nicht dargestellt, da sie in bekannter Weise aufgebaut sind.

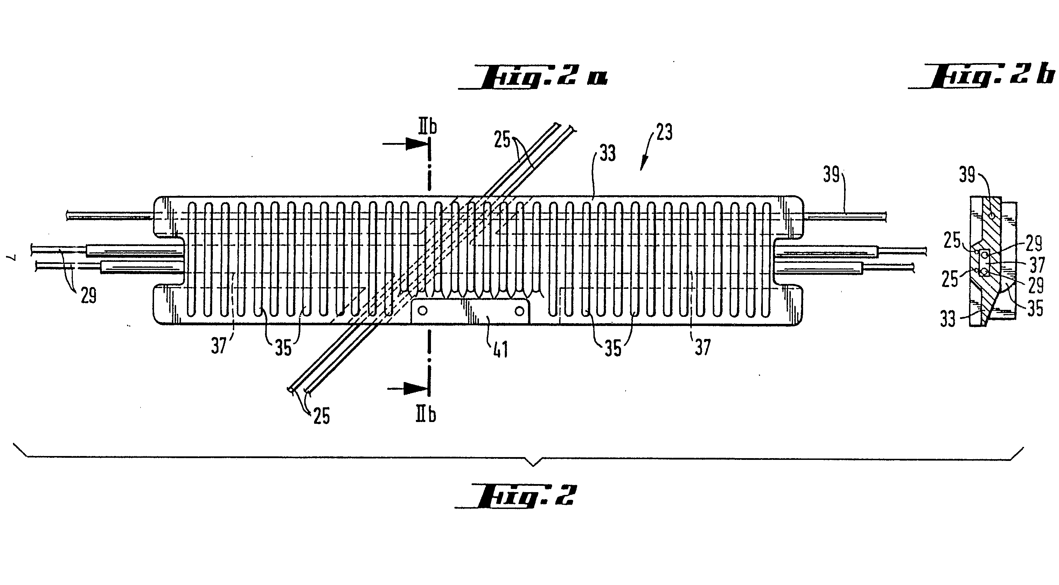

Der Wärmetauscherblock 23 ist in Figur 2 in Draufsicht (in Figur 1 von unten gesehen) sowie im Querschnitt detailliert dargestellt. In einem Aluminiumblock 33 mit Kühlrippen 35 sind ein Widerstandsheizelement 37 mit den Zuleitungen 29, ein Kühlrohr 39 sowie (im vorliegenden Beispiel zwei) Kapillarrohre 25 für die mobile Phase und die Proben eingeschmolzen. Die Kapillarrohre 25 bestehen aus V4A-Stahl von 0,13 ± 0,02 mm Innendurchmesser und 1,5 mm Aussendurchmesser und sind auf eine Länge von 90 mm in den Aluminiumblock 33 eingeschmolzen. Sie kreuzen unter einem Winkel von etwa 45° das Widerstandsheizelement 37 in dessen unmittelbarer Nähe.

Das Widerstandsheizelement 37 ist ein Flachrohrheizkörper mit 110 W Innenleistung der über eine wirksame Länge von etwa 250 mm (entsprechende Oberfläche etwa 8000 mm²) in den Aluminiumblock 33 eingeschmolzen ist. Das Kühlrohr 39 ist ein V4A-Stahlrohr von 2 mm Innendurchmesser und 3 mm Aussendurchmesser und etwa 290 mm Länge. Der erforderliche Kühlmitteldurchfluss beträgt 0,1-0,3 lmin⁻¹.

Mit 41 ist ein schematisch dargestellter Temperaturfühler bezeichnet, dessen Position relativ zu den Kapillarrohren 25, dem Kühlrohr 39 und dem Widerstandsheizelement 37 so gewählt ist, dass sich an der Verteilung der Oberflächentemperatur bei Änderung der Durchflussgeschwindigkeit der mobilen Phase möglichst wenig ändert, auch wenn sich wegen der Temperaturregelung die zugeführte Heizleistung ändert.

Das Vorhandensein sowohl des Widerstandsheizelementes 37 als auch des Kühlrohres 39 im Wärmetauscherblock 23 ermöglicht eine Temperaturregelung der mobilen Phasen auf Werte sowohl oberhalb als auch unterhalb der jeweiligen Raumtemperatur.

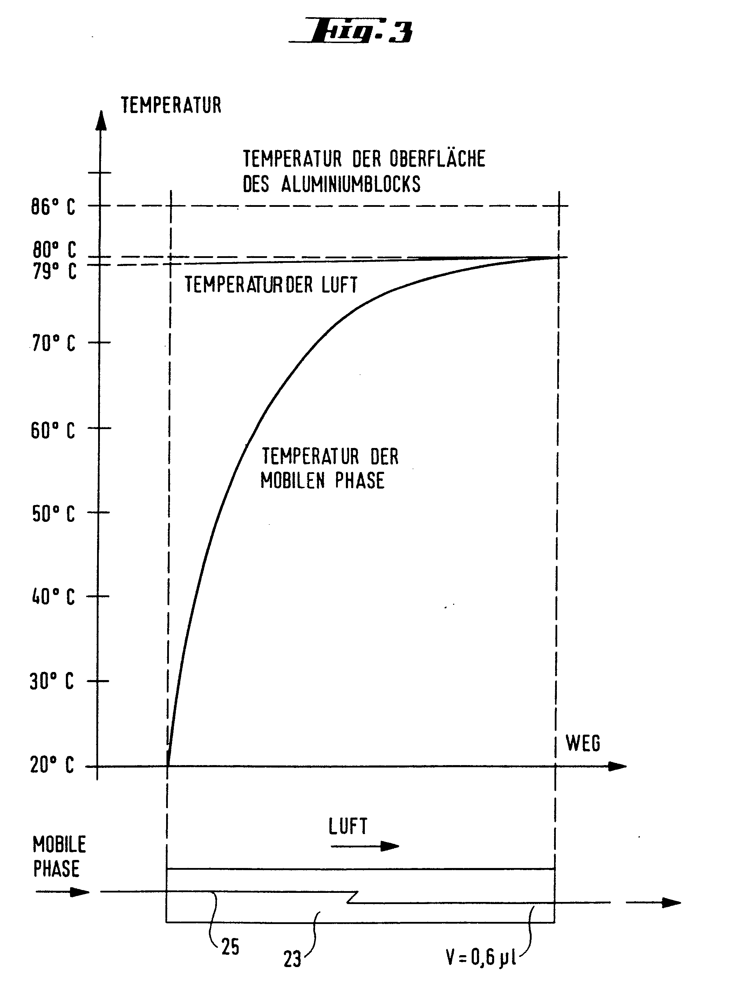

In Figur 3 sind als typisches Beispiel die Verläufe der Temperaturen der am Wärmetauscherblock 23 vorbeistreichenden Luft und der durch ihn hindurchfliessenden mobilen Phase über der aktiven Wegstrecke des Wärmetauscherblocks 23 dargestellt. Letzterer ist in Figur 3 nur schematisch angedeutet. Wichtig ist, dass am Ende der aktiven Wegstrecke die Temperaturen von Luft und mobiler Phase gleich hoch sind. Die Oberflächentemperatur des Aluminiumblocks 33 liegt um einige Grad höher. Dies ist jedoch nicht weiter störend, da die Temperaturdifferenz durch entsprechende Korrekturmassnahmen in der zugeordneten Regelschaltung berücksichtigt werden kann.

**Patentansprüche**

1. Thermostatisiervorrichtung für die mobile Phase in einem Flüssigkeitschromatographen mit einem von der mobilen Phase durchströmten Wärmetauscher zwischen Probendosiervorrichtung und Eingang der Trennsäule und mit einem mit einer Temperaturregelvorrichtung verbundenen Temperaturfühler, dadurch gekennzeichnet, dass der Wärmetauscher (23) ein von der mobilen Phase durchströmtes Kapillarrohr (25) aufweist, welches einen Innendurchmesser von weniger als 0,15 mm und innerhalb des Wärmetauschers ein Volumen von weniger als 2 µl hat, dass der Wärmetauscher (23) ein Heizelement (37) und/oder Kühlelement (39) aufweist, welche gemeinsam mit dem Kapillarrohr (25) in einem Radiatorkörper (33) aus gut wärmeleitendem Material eingeschmolzen sind, und dass der Radiatorkörper gleichzeitig Heiz- bzw. Kühlkörper für die umgewälzte Umgebungsluft (15) der Trennsäule (27) ist.

2. Thermostatisiervorrichtung nach Anspruch 1, dadurch gekennzeichnet, dass der Temperaturfühler (41) auf der Oberfläche des Radiatorkörpers (33) in der Nähe sowohl des Kapillarrohres (25) als auch des Heizelementes (37) bzw. Kühlelementes (39) angeordnet ist.

**Claims**

1. A thermostatic device for the mobile phase in a liquid chromatograph, with a heat exchanger through which the mobile phase passes, said heat exchanger being disposed between the sample injection device and the entrance of the separation column, and with a temperature sensor connected to a temperature control assembly, characterized in that the heat exchanger (23) includes a capillary tube (25) through which the mobile phase passes, with the inner diameter of said capillary tube being less than 0.15 mm, and the volume of said capillary tube within said heat exchanger being less than 2μl, that the heat exchanger (23) includes a heating element (37) and/or cooling element (39), which, in conjunction with the capillary tube (25), are commonly sealed into a radiator body (33) of heat conducting material, and that the radiator body also acts respectively as heating and cooling element for the revolved ambient air (15) of the seperation column (27).

2. A thermostatic device as in claim 1, characterized in that the temperature sensor (41) is disposed on the surface of the radiator body (33) in the vicinity of the capillary tube (25) as well as in the vicinity of the heating element (37) and the cooling element (39) respectively.

**Revendications**

1. Thermostat pour la phase mobile dans un chromatographe à phase liquide avec un échangeur thermique traversé par la phase mobile entre le doseur d'échantillons et lentrée de la colonne à fractionner, et avec une sonde de température raccordée à un dispositif de réglage de la température, caractérisé en ce que l'échangeur thermique (23) présente un tube capillaire (25) traversé par la phase mobile, et qu'à un diamètre interne de moins de 0,15 mm et lintérieur de léchangeur thermique, un volume inférieur à 2 microlitres, en ce que léchangeur thermique (23) présente un élément chauffant (37) et/ou un élément refroidisseur (39) qui, en commun avec le tube capillaire (25) sont fondus dans un corps de radiateur (33) en matériau de bonne conductibilité thermique, et en ce que le corps de radiateur est simultanément corps chauffant ou respectivement refroidisseur pour l'air ambiant (15) circulant autour de la colonne à fractionner (27).

2. Thermostat selon la revendication 1, caractérisé en ce que la sonde de température (41) est placée sur la surface du corps de radiateur (33), aussi bien au voisinage du tube capillaire (25) que de l'élément chauffant (37) ou respectivement de lélément refroidisseur (39).

Fig. 1

*Fig. 2 a*

*Fig. 2 b*

*Fig. 2*

0 043 946

## Fig. 3

TEMPERATUR

TEMPERATUR DER OBERFLÄCHE
DES ALUMINIUMBLOCKS

86° C

80° C
79° C

TEMPERATUR DER LUFT

70° C

60° C

TEMPERATUR DER
MOBILEN PHASE

50° C

40° C

30° C

WEG

20° C

MOBILE
PHASE

LUFT

25   23   V = 0,6 µl